Europäisches Patentamt

(19) European Patent Office

Office européen des brevets

(11) Numéro de publication: **0 001 299**
**B1**

(12) **FASCICULE DE BREVET EUROPEEN**

(21) Numéro de dépôt: **78200087.1**

(22) Date de dépôt: **10.07.78**

(51) Int. Cl.³: **B 60 D 1/14, B 60 T 7/20**

(54) Dispositifs d'attelage pour remorques

(30) Priorité: **09.09.77 FR 7727286**

(43) Date de publication de la demande:
**04.04.79 Bulletin 79/07**

(45) Mention de la délivrance du brevet:
**12.11.80 Bulletin 80/23**

(84) Etats contractants désignés:
**BE CH DE GB NL SE**

(56) Documents cités:
**DE - B - 1 028 441**
**DE - B - 1 243 989**
**FR - A - 1 373 331**
**FR - A - 1 598 248**
**FR - A - 2 210 153**
**US - A - 2 562 008**

(73) Titulaire: **ETABLISSEMENTS VASSEUR ET CIE**
**Société anonyme:**
**10, rue Jean Jaurès**
**F - 9400 Champigny (FR)**

(72) Inventeur: **Vasseur, Gilbert, Michel**
**6 Avenue du Château**
**F - 62000 La Comté par Houdain (FR)**

(74) Mandataire: **Vander-Heym, Roger**
**172 Boulevard Voltaire**
**F - 75011 Paris (FR)**

Courier Press, Leamington Spa, England.

Dispositifs d'attelage pour remorques

Dans le brevet français N° 1 598 248 au nom de la demanderesse on a décrit des perfectionnements aux dispositifs d'attelage pour remorques, à dispositif de freinage à commande par inertie, du genre de ceux comportant des barres stabilisatrices dont la mise en tension engendrait un couple ayant pour but d'équilibrer les forces appliquées au véhicule tracteur.

Ces perfectionnements consistaient à annuler la force de réaction appliquée aux paliers du coulisseau de commande par inertie des freins de la remorque par une force ascendante appliquée auxdits paliers, ladite force étant créée lors de la mise en tension des barres stabilisatrices.

Cette force était transmise à la flèche d'attelage au moyen de deux ensembles télescopiques latéraux la réunissant aux barres stabilisatrices correspondantes, chaque ensemble télescopique, convenablement articulé par un système à la Cardan, était constamment sollicité en extension par un ressort dont la détente assurait la constance de la force à transmettre à ladite flèche quel que soit l'angle formé par la remorque et le véhicule tracteur.

Ces dispositifs télescopiques à ressort donnaient satisfaction mais ils étaient d'une fabrication coûteuse et présentaient un certain encombrement, vers l'extrémité de la flèche, souvent nuisible au logement de la roue dite "jockey".

Le moyen général décrit ci-dessus est également utilisé dans le brevet français N° 2.210.153 qui est relatif à un dispositif comportant une seule barre stabilisatrice.

Selon ce brevet, la force ascendante peut être créée par un élément pneumatique interposé entre la barre stabilisatrice et le coulisseau du frein à inertie. Simple dans son principe, ce dispositif qui fait appel à un fluide sous pression est très difficile à mettre en oeuvre.

Les perfectionnements de l'invention qui remédient à ces inconvénients consistent à utiliser deux biellettes élastiquement déformables, articulées librement sur un axe commun à l'extrémité de la flèche de la remorque et dout l'extrémité libre de chacune d'elles, normalement cambrée vers le bas, est en appui élastique fermanent sur la barre stabilisatrice correspondante de l'attelage.

L'invention sera mieux comprise par la description qui va suivre faite en se référant aux dessins annexés à titre d'exemple indicatif seulement, sur lesquels:

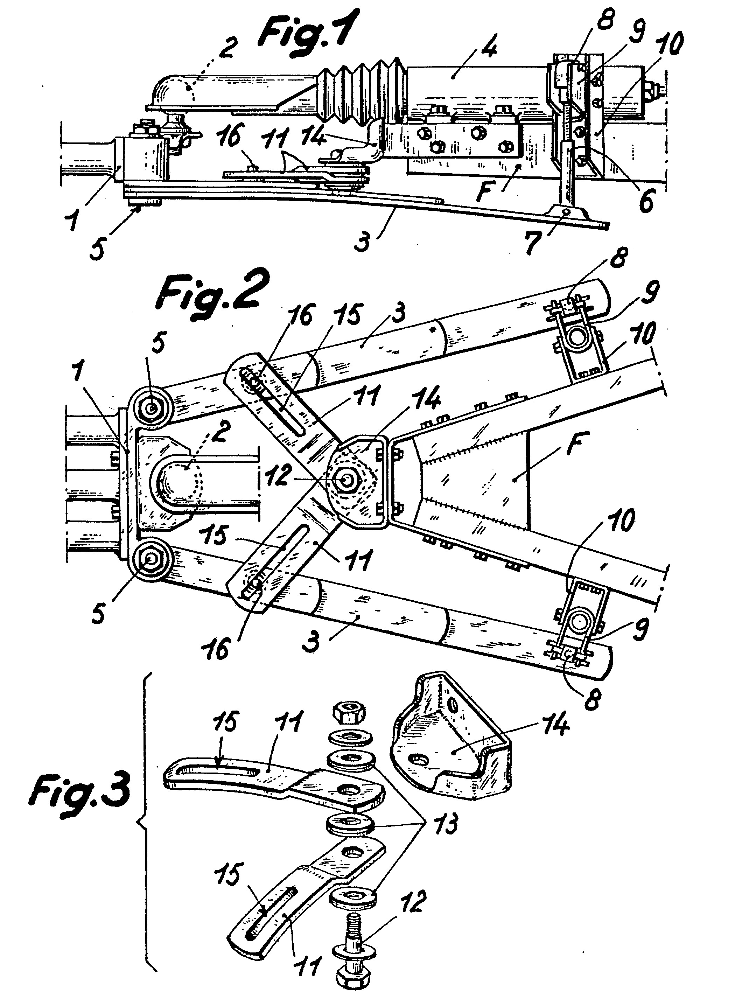

La figure 1 est une vue en élévation d'un dispositif d'attelage à barres stabilisatrices usuelles montrant sa liaison élastique avec la flèche d'une remorque, conformément à l'invention;

La figure 2 en est la vue de dessus;

La figure 3 est une vue en perspective éclatée du dispositif de l'invention;

La figure 4 est une vue analogue à la figure 1 montrant la position des biellettes et des barres stabilisatrices avant leur tension;

La figure 5 est une vue de dessus du dispositif d'attelage pendant le braquage du véhicule tracteur.

En se reportant aux dessins, 1 est la ferrure de l'attelage usuel d'un véhicule tracteur, 2 est la rotule d'accrochage de la flèche F d'une remorque et 3 les barres stabilisatrices, ladite flèche étant équipée d'un système 4 de freinage par inertie usuel.

Dans ce système d'attelage, les barres 3 stabilisatrices réalisées en acier à ressort sont pivotées en 5 dans la ferrure 1 puis leur extrémité libre est accrochée en tension sur le côté correspondant de la flèche F au moyen d'un tirant 6, réglable, s'articulant d'une part, en 7 sur chacune desdites barres 3 et, d'autre part, sur la dite flèche par l'intermédiaire d'une articulation 8 à la Cardan se logeant dans une chape 9, pivotante et verrouillable d'une façon connue entre les ailes d'un montant profilé 10 rendu solidaire de chacun des côtés de ladite flèche.

La mise en tension des barres 3 a pour effet d'engendrer au niveau du système 4 de freinage, une force dirigée vers le bas, compromettant le libre coulissement par inertie de la commande hydraulique dudit système de freinage.

Le dispositif de la présente invention, qui permet d'annuler cette force en lui appliquant une force antagoniste engendrée lors de la mise en tension des barres stabilisatrices 3, consiste à utiliser deux biellettes 11 élastiquement déformables, articulées librement sur un axe 12 commun avec interposition de butées à aiguilles 13, sur une pièce 14 rendue solidaire de l'extrémité de la flèche de la remorque, lesdites biellettes convenablement cambrées vers le bas, prenant élastiquement et constamment appui par leur extrémité libre en un point déterminé de chacune des barres 3 stabilisatrices correspondantes de l'attelage.

A cet effet et selon un mode de réalisation, chaque biellette 11 présente une lumière 15 longitudinale, située à l'extrémité cambrée de ladite biellette, dans laquelle peut se déplacer un doigt 16 épaulé, porté par chacune des barres 3 stabilisatrices, sous-jacentes.

Ainsi, dans une telle disposition les extrémités libres des biellettes 11 restent constamment en appui sur les barres 3 pendant la traction, le freinage ou le braquage.

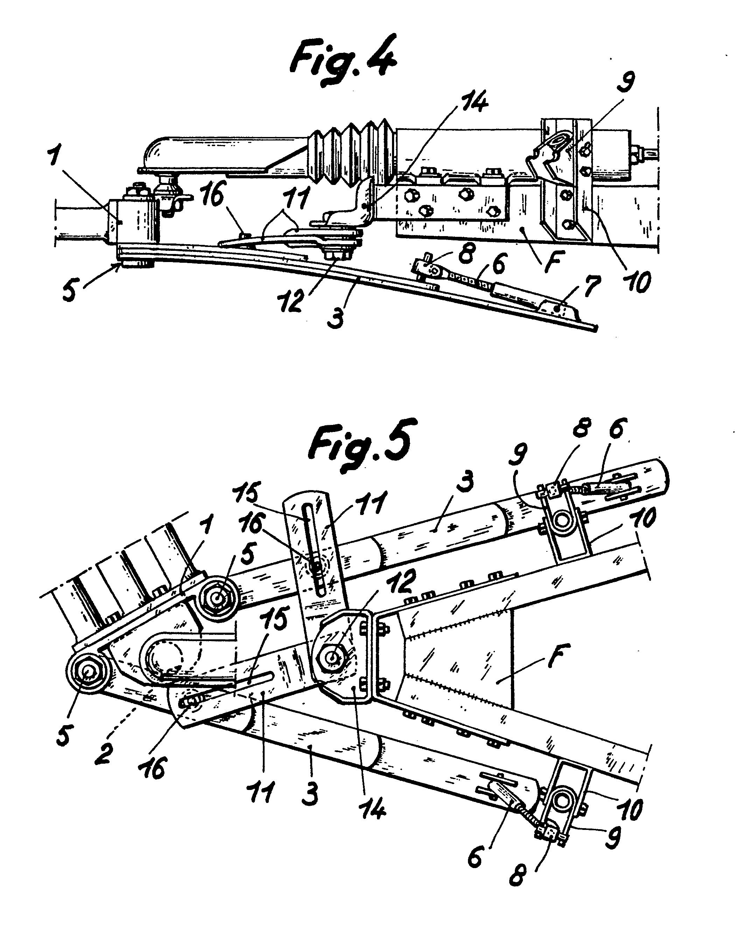

La figure 5, qui illustre une position de braquage montre les déplacements angulaires de l'ensemble articulé formé par les barres 3 et les biellettes 11 élastiquement déformables.

La figure 4 montre qu'avant le bandage des barres 3 stabilisatrices, au moyen des tirants 6 précités, les extrémités libre des biellettes 11 normalement cambrées vers le bas sont en appui sur lesdites barres de sorte que lors de la tension de ces dernières lesdites biellettes s'infléchissent élastiquement vers la haut, cette contrainte élastique permanente annulant, par réaction, l'effet de couple appliqué au système de freinage.

Bien entendu, la présente invention ne se limite pas au mode de réalisation décrit et représenté mais s'étend, au contraire, à toutes variantes de formes, matières et dimensions.

## Revendications

1. Dispositifs d'attelage pour remorques, à dispositif de freinage (4) à commande par inertie, du genre de ceux comportant des barres stabilisatrices (3) dont la mise en tension engendre un couple ayant pour but d'équilibrer les forces appliquées au véhicule tracteur et comportant un dispositif annulant la force de réaction appliquée aux paliers du coulisseau de commande par inertie des freins de la remorque en créant une force antagoniste ascendante appliquée auxdits paliers, caractérisés en ce que cette force antagoniste est réalisée au moyen de deux biellettes (11) élastiquement déformables, articulées librement sur un axe commun (12) à l'extrémité de la flèche (F) de la remorque et dont l'extrémité libre de chacune d'elles, normalement cambrée vers le bas, est en appui élastique permanent sur la barre stabilisatrice (3) correspondante de l'attelage.

2. Dispositifs d'attelage pour remorques selon la revendication 1, caractérisés en ce que les biellettes (11) sont maintenues sur les barres (3) par la coopération d'une lumière (15) longitudinale prévue sur l'extrémité cambrée de chacune desdites biellettes, et d'un doigt (16) épaulé porté par chacune des barres stabilisatrices sous-jacentes.

3. Dispositifs d'attelage pour remorques selon chacune des revendications 1 et 2, caractérisés en ce que le libre pivotement des biellettes (11) sur l'axe (12) de la flèche s'effectue sans frottement par l'interposition de butées à aiguilles (13).

## Patentansprüche

1. Anhängerzugvorrichtungen mit Bremsmechanismus (4) mit Trägheitsantrieb vom Typ mit Stabilisierungsstangen (3), deren Anspannung ein Moment erzeugt, um die beim schleppenden Fahrzeug angreifenden Kräfte auszugleichen, und die eine Vorrichtung zur Aufhebung der an den Lagern der Trägheitsantriebsgleitbacke der Anhängerbremsen angreifenden Gegenkraft durch Erzeugung einer an diesen Lagern wirkenden Aufwärtskraft umfaßt, wobei diese aufwärtswirkende Gegenkraft mittels zweier, elastisch verformbarer, beweglich an einer gemeinsamen Achse (12) am Ende des Anhängerauslegers (F) angeschlossener Schwingarme (11) bewirkt wird, welche an ihrem normalerweise nach unten gebogenen Ende elastisch auf der jeweiligen Stabilisierungsstange (3) der Kupplung aufliegen.

2. Anhängerzugvorrichtungen nach Patentanspruch 1, dadurch gekennzeichnet, daß die Schwingarme (11) auf den Stangen (3) durch einen Längsschlitz (15) am gebogenen Ende jedes Schwungarms und durch einen von den darunterliegenden Stabilisierungsstangen getragenen Bundzapfen (16) gehalten werden.

3. Anhängerzugvorrichtungen nach Patentansprüchen 1 und 2, dadurch gekennzeichnet, daß das Schwenken der Schwingarme (11) um die Achse (12) des Auslegers durch Einfügung von Madellagern (13) ohne Reibung erfolgt.

## Claims

1. Coupling systems for trailers, with inertia controlled braking device (4) similar to those comprising stabilizing bars (3) the energization of which generates a torque the purpose of which is to balance the forces applied to the hauling vehicle, and which comprises a system that cancels out the reaction force applied to the bearings of the control slide through the inertia of the trailer brakes and by creating a rising counter-reaction applied to the said bearings, characterized by the fact that this counter-reaction force is obtained by means of two control links (11) elastically deformable, freely hinged onto a common pin (12) at the end of the control bar (F) of the trailer and of which the free end of each one, normally cambered upwards, bears elastically permanently on the corresponding stabilizing bar (3) of the coupling system.

2. Coupling systems for trailers according to claim 1, characterized by the fact that the control links (11) are held on the bars (3) through the help of a lengthwise slot (15) provided on the cambered end of each one of the said control links, and a shouldered pin (16) carried by each one of the underlying stabilizing bars.

3. Coupling systems for trailers according to each one of claims 1 and 2, characterized by the fact that free pivoting of the control links (11) on shaft (12) of the control bar occurs without friction through interposition of needle-equipped stop units (13).

Fig.1

Fig.2

Fig.3

# Fig.4

# Fig.5